# EUROPEAN PATENT SPECIFICATION

(11) **EP 0 512 407 B1**
(45) Date of publication and mention of the grant of the patent: **31.01.1996**
(21) Application number: 92107375.5
(22) Date of filing: 30.04.1992
(51) Int. Cl.: F16H 25/24, F16H 19/00

(54) **Worm screw for meshing with a rack gear**
Schneckenrad zum Eingriff in eine Zahnstange
Vis sans fin coopérant avec une crémaillère

(30) Priority: 10.05.1991 IT PD910040 U
(43) Date of publication of application: 11.11.1992
(73) Proprietor: M.G. - MINI GEARS S.p.A., I-35010 Padova (IT)
(72) Inventor: De Stefani, Vincenzo, I-35100 Padova (IT)
(74) Representative: Modiano, Guido, Dr.-Ing.

(56) References cited:
- GB-A- 2 089 929
- US-A- 4 187 933

## Description

The present invention relates to a worm screw suitable for meshing with a rack gear.

Worm screw/gearwheel couplings are currently known and extensively used in various fields of mechanics.

The worm screw conveniently has one or more starts, i.e. it is formed by one or more mutually adjacent helical teeth-threads.

In this type of meshing, the teeth of the gearwheel continuously engage the tooth-thread of the screw.

A particular type of worm screw/gearwheel coupling is constituted by a worm screw which meshes with a rack, which can essentially be considered as a gearwheel which has an infinite pitch diameter.

In this case, however, the teeth of the rack do not always engage the tooth-thread of the worm screw.

It is also known that each tooth-thread of the worm screw has an axial cross-section which is substantially constant in compliance with typical machining tolerances.

This causes jerks at the beginning of the meshing of the teeth of the rack with the corresponding initial end of the tooth-thread of the worm screw, both with right-handed rotation and with left-handed rotation.

The occurrence of these jerks constitutes a considerable problem for this type of couplings, particularly in applications in which quietness of the transmission is one of the essential requirements.

Not to mention also the possibility that the toothing might be subject to damage or breakage in the course of time due to this non-gradual meshing.

Also known from GB-A-2089929 is a feed device having a plurality of telescopically extensible arms, each drivingly connected to a respective threaded nut member, in turn drivable by a single rotatable threaded spindle. To accommodate possible variations in the spacing of the adjacent nut members being driven on the spindle, a threaded portion at each end of the spindle has one or more flanks of the thread set back from the flanks of the basic thread by an amount which decreases towards the middle of the length of the spindle, with the reduced length flanks merging into the basic length flanks.

The aim of the present invention is to provide a worm screw for meshing with a rack gear, whose structure eliminates the problems described above in known types.

A consequent primary object is to provide a worm screw the particular structure of which can be obtained with conventional machines and equipment.

Not least object is to expand the field of application of worm screw/rack couplings, which has so far been limited by the above mentioned problems.

This aim, these objects and others which will become apparent hereinafter are achieved by a worm screw for meshing with a rack gears defined in the appended claims.

Further characteristics and advantages of the invention will become apparent from the detailed description of an embodiment thereof, illustrated only by way of non-limitative example in the accompanying drawings, wherein:
figure 1 is a side view of the meshing of a worm screw according to the invention and a rack;
figure 2 is a sectional view of the worm screw, taken along the plane II-II of figure 1;
figure 3 is an enlarged sectional view, taken along the plane III-III of figure 2;
figure 4 is an enlarged sectional view, taken along the plane IV-IV of figure 2;
figure 5 is an enlarged sectional view, taken along the plane V-V of figure 2;
figure 6 is an enlarged sectional view, taken along the plane VI-VI of figure 2;
figure 7 is an enlarged sectional view of a tooth-thread.

With reference to the above figures, a worm screw according to the invention is designated by the reference numeral 1 and meshes with a rack, generally designated by the reference numeral 2.

In this embodiment, said worm screw has a single start, but in other embodiments it may conveniently have a plurality of starts.

According to the invention, the ends 3 and 4 of the tooth-thread 5 of the worm screw 1, each of which constitutes the initial meshing portions for one of the two rotation directions, are tapered.

The taper extends conveniently over an angular sector which preferably measures approximately 90 degrees and relates in particular to both sides 6 and 7 of the tooth-thread 5.

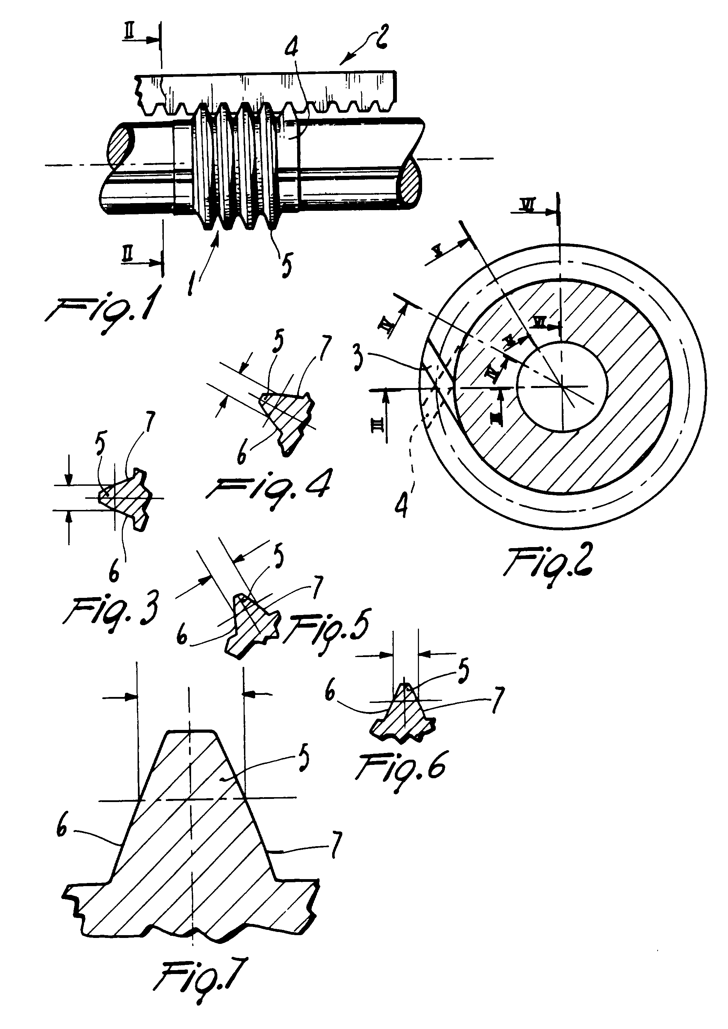

The previously mentioned figures 3 to 6 illustrate various cross-sections of the tooth-thread 5, taken at mutually angularly equidistant positions of the end 3 of the tooth-thread 5.

By way of example, for a tooth-thread 5 the width of which in the central portion at the pitch diameter is 2.51 mm, said width passes from an initial value of 2.45 mm, to 2.47 mm after 30 degrees, to 2.49 mm after another 30 degrees and to 2.51 mm after another 30 degrees.

The reference of the width measurement is identified in figures 3 to 6 by the dimension lines.

With this taper, the end portions 3 and 4, when, in accordance with the direction of rotation, they constitute the initial meshing portions, mesh with the teeth of the rack 2 gently, without causing jerks.

At this point it should be stressed that the machining to which each side 6 and 7 must be subjected at the ends 3 and 4, although executable with numeric-control machines, is extremely sophisticated, since the sectional profile variation of each side with respect to the median axis thereof must take into account the fact that the position of said median axis varies along the helical line which generates the tooth-thread.

In practice it has been observed that the invention has achieved the intended aim and objects.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Worm screw (1) for meshing with a rack gear (2), characterized in that the width of the cross-section of the thread (5) at a plane containing the axis of the worm screw (1), measured between the thread (5) flanks at the pitch diameter and at every other diameter becomes gradually narrower towards each axial end (3, 4) of the thread (5) of the worm screw (1).

2. Worm screw according to claims 1 and 2, characterized in that the gradual narrowing of the cross-section of the thread (5) towards each axial end (3, 4) of the thread (5) extends over an angular sector of preferably 90 degrees.

3. Worm screw according to one or more of the preceding claims, characterized in that the reduction in the width of the thread (5) cross section decreases linearly with the angular position of the plane of the cross-section.

## Patentansprüche

1. Schneckenrad (1) für den Eingriff in eine Zahnstange (2), dadurch gekennzeichnet, daß die Breite des Querschnitts des Schneckenzahnes (5), in einer die Achse des Schneckenrades (1) enthaltenden Ebene zwischen den Zahnflanken des Schneckenzahns (5) auf dem Teilkreisdurchmesser und auf jedem anderen Durchmesser gemessen, gegen jedes axiale Ende (3, 4) des Schnekkenzahns (5) des Schneckenrades (1) hin fortschreitend schmäler wird.

2. Schneckenrad nach Anspruch 1, dadurch gekennzeichnet, daß die gegen jedes axiale Ende (3, 4) des Schneckenrades (5) hin fortschreitende Verschmälerung des Querschnittes des Schneckenzahnes (5) sich über einen Winkelabschnitt von vorzugsweise 90° erstreckt.

3. Schneckenrad nach einem oder mehreren der vorausgehenden Ansprüche, dadurch gekennzeichnet, daß die Verringerung der Breite des Querschnitts des Schneckenzahnes (5) mit der Winkelposition der Querschnittsebene linear abnimmt.

## Revendications

1. Vis sans fin (1) destinée à s'engrener avec une crémaillère (2), caractérisée en ce que la largeur de la section transversale du filetage (5) au niveau d'un plan contenant l'axe de la vis sans fin (1), mesurée entre 1es flancs de filetage (5) au niveau du diamètre de pas et au niveau de tout autre diamètre devient progressivement plus étroite dans la direction de chaque extrémité axiale (3, 4) du filetage (5) de la vis sans fin (1).

2. Vis sans fin selon les revendications 1 et 2, caractérisée en ce que le rétrécissement progressif de la section transversale du filet (5) dans la direction de chaque extrémité axiale (3, 4) du filetage (5) s'étend suivant un secteur angulaire de préférence de 90 degrés.

3. Vis sans fin selon l'une ou plusieurs des revendications précédentes, caractérisée en ce que la réduction de ia largeur de la section transversale du filetage (5) diminue linéairement en fonction de la position angulaire du plan de la section transversale.
